# EUROPEAN PATENT SPECIFICATION

(11) **EP 2 842 834 B1**
(45) Date of publication and mention of the grant of the patent: **21.09.2016**
(21) Application number: 14181623.1
(22) Date of filing: 20.08.2014
(51) Int. Cl.: B62D 3/12

(54) **Rack shaft supporting structure**
Zahnstangentragstruktur
Structure de support d'arbre de crémaillère

(30) Priority: 28.08.2013 JP 2013176796
(43) Date of publication of application: 04.03.2015
(73) Proprietor: JTEKT CORPORATION, Osaka-shi, Osaka 542-8502 (JP)
(72) Inventor: Imamura, Naganori, Osaka-shi, Osaka 542-8502 (JP)
(74) Representative: Winter, Brandl, Fürniss, Hübner, Röss, Kaiser, Polte - Partnerschaft mbB

(56) References cited:
- EP-A1- 0 470 424
- EP-A1- 1 389 574
- EP-A2- 1 352 807
- EP-A2- 1 632 421
- DE-A1-102005 035 633
- DE-A1-102008 050 093
- FR-A1- 2 440 859
- FR-A1- 2 655 858
- JP-A- H07 315 234
- US-A1- 2012 242 054

## Description

### BACKGROUND OF THE INVENTION

### 1. Field of the Invention

The present invention relates to a rack shaft supporting structure.

### 2. Description of Related Art

There has been proposed a steering system in which a pressing member is brought into contact with a side face of a groove provided in a back face of a rack of a rack shaft so that the rotation of the rack shaft is suppressed, in a straight traveling state and in a substantially straight traveling state, that is, in a state where the rack shaft is located at a center stroke position and in a state where the rack shaft in the vicinity of the center stroke position (for example, refer to Japanese Patent No. 3400860). In Japanese Patent No. 3400860, when the rack shaft is steered to the right or the left from the substantially straight traveling state, the pressing member moves away from the side face of the groove of the rack shaft.

There has been proposed a rack shaft supporting structure in which a plurality of axial grooves is provided in a back face of a rack of a rack shaft, protruding portions of a rack guide (equivalent to protruding portions of a seat attached to the rack guide) are respectively engaged with the axial grooves so that the rotation of the rack shaft is suppressed (for example, refer to Japanese Patent Application Publication No. 2003-306153 (JP-2003-306153 A)).

In Japanese Patent No. 3400860, when the rack shaft is steered to the right or the left from the substantially straight traveling state, the pressing member moves away from the side face of the groove of the rack shaft, and therefore, frictional resistance that is applied to the rack shaft by the pressing member decreases. Accordingly, the rack shaft reaches a stroke end without a decrease in a moving speed of the rack shaft in an axial direction. When an end portion of the rack shaft comes into contact with an end portion of a housing and the rack shaft stops (in other words, at a time of so-called end contact), loud impact noise occurs, or a large load is applied to a meshing portion between the rack and a pinion due to vibration caused by an impact load.

Japenese Patent No. H07315234 (JP H07 315234 A), which is the application of the earlier mentioned Japanese patent No. 3400860, discloses a rack shaft supporting structure with the features of the preamble of claim 1.

An object of the invention is to provide a rack shaft supporting structure that can suppress impact noise or vibration at a time of end contact.

According to an aspect of the invention, there is provided a rack shaft supporting structure including: a rack shaft that has a rack that meshes with a pinion, and an axial groove that is formed in a back face of the rack; a housing which has an accommodation portion, and into which the rack shaft is inserted, the accommodation portion extending in an orthogonal direction orthogonal to an axial direction of the rack shaft; a rack guide that is accommodated in the accommodation portion, and supports the rack shaft in such a manner that the rack shaft is slidable in the axial direction; a sealing member that is fixed to an outward opening end that is provided at a side of the accommodation portion, the side being opposite to the rack shaft; an urging member that is interposed between the sealing member and the rack guide so as to urge the rack guide toward the rack shaft; a rack guide supporting member that has a supporting hole that supports a part of the rack guide in such a manner that the rack guide is slidable in the orthogonal direction, the rack guide supporting member being supported by the housing or the sealing member; and an elastic body that is supported by the rack guide supporting member, is accommodated in the axial groove of the rack shaft, and is able to press the rack shaft in a radial direction, wherein a bottom face of the axial groove of the rack shaft includes a first region that includes a first axial end that faces the elastic body in the orthogonal direction when the rack shaft is at one stroke end, a second region that includes a second axial end that faces the elastic body in the orthogonal direction when the rack shaft is at the other stroke end, and an intermediate region that is interposed between the first and second regions, and avoids contacting the elastic body, wherein a chevron-shaped protrusion that compresses the elastic body in the orthogonal direction is provided in each of the first and second regions, and wherein the chevron-shaped protrusion includes a first slope face that is disposed on a side of the intermediate region, and a second slope face that is disposed on a side of a corresponding one of the first and second axial ends, and that tilts toward a side opposite to a side toward which the first slope face tilts.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram illustrating a schematic configuration of a rack pinion type steering system to which a rack shaft supporting structure according to a first embodiment of the invention is applied;
FIG. 2 is a sectional view of a main part of the steering system including the rack shaft supporting structure according to the first embodiment;
FIG. 3 is a partially broken side view of the rack shaft supporting structure according to the first embodiment;
FIG. 4 is a schematic exploded perspective view of the rack shaft supporting structure according to the first embodiment;
FIGS. 5A to 5C are schematic transverse sectional views of a rack shaft and elastic bodies in the first embodiment, FIG. 5A illustrating a state where the rack shaft has been displaced to a stroke center, FIG. 5B illustrating a state where the rack shaft has been displaced to one stroke end, and FIG. 5C illustrating a state where the rack shaft has been displaced to the other stroke end;
FIGS. 6A and 6B are schematic transverse sectional views of the rack shaft and the elastic bodies in the first embodiment, FIGS. 6A and 6B sequentially illustrating movements during a turning-back steering operation;
FIGS. 7A to 7C are schematic transverse sectional views of the rack shaft and the elastic bodies in the first embodiment, FIGS. 7A to 7C sequentially illustrating movements during the turning-back steering operation;
FIG. 8 is an enlarged sectional view of a rack shaft supporting structure according to a second embodiment of the invention;
FIG. 9 is an exploded perspective view of the rack shaft supporting structure according to the second embodiment of the invention;
FIGS. 10A to 10C are schematic transverse sectional views of a rack shaft and an elastic body, FIG. 10A illustrating a state where the rack shaft has been displaced to a stroke center, FIG. 10B illustrating a state where the rack shaft has been displaced to one stroke end, and FIG. 10C illustrating a state where the rack shaft has been displaced to the other stroke end;
FIG. 11 is an enlarged sectional view of a rack shaft supporting structure according to a third embodiment of the invention;
FIG. 12 is an exploded perspective view of a rack shaft supporting structure according to a fourth embodiment of the invention;
FIG. 13 is a schematic transverse sectional view of a rack shaft and an elastic body in a fifth embodiment of the invention; and
FIGS. 14A and 14B are schematic views illustrating elastic bodies in a sixth embodiment and a seventh embodiment of the invention, respectively.

### DETAILED DESCRIPTION OF EMBODIMENTS

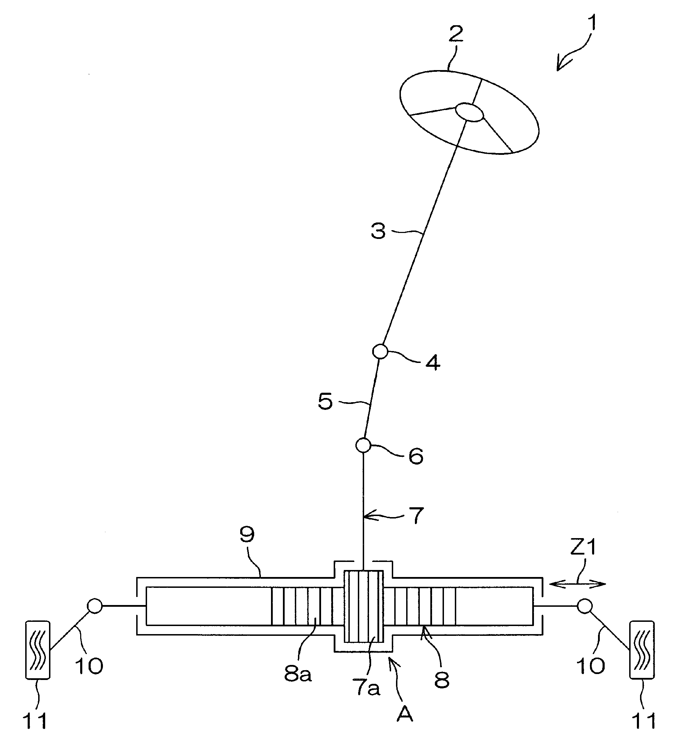

Embodiments of the present invention will be described with reference to the accompanying drawings. FIG. 1 is a schematic view illustrating a configuration of a steering column to which a rack shaft supporting structure according to a first embodiment of the present invention is applied. Referring to FIG. 1, a steering system 1 includes a steering shaft 3, an intermediate shaft 5, a pinion shaft 7, and a rack shaft 8. A rack and pinion mechanism A as a steering mechanism is constituted by the pinion shaft 7 and the rack shaft 8. The steering shaft 3 is connected to a steering member 2 such as a steering wheel. The intermediate shaft 5 is connected to the steering shaft 3 via a universal joint 4. The pinion shaft 7 is connected to the intermediate shaft 5 via a universal joint 6. The rack shaft 8 is a steered shaft that has a rack 8a meshing with a pinion 7a provided in the vicinity of an end portion of the pinion shaft 7, and that extends in a lateral direction of a vehicle.

The rack shaft 8 is supported via a plurality of bearings (not illustrated) in a rack housing 9 fixed to a vehicle body in such a manner that the rack shaft 8 is able to linearly reciprocate along an axial direction Z1. Opposite end portions of the rack shaft 8 protrude toward opposite sides of the rack housing 9, respectively. A tie rod 10 is coupled with each of the opposite end portions. The tie rods 10 are connected to steered wheels 11 via knuckle arms (not illustrated), respectively.

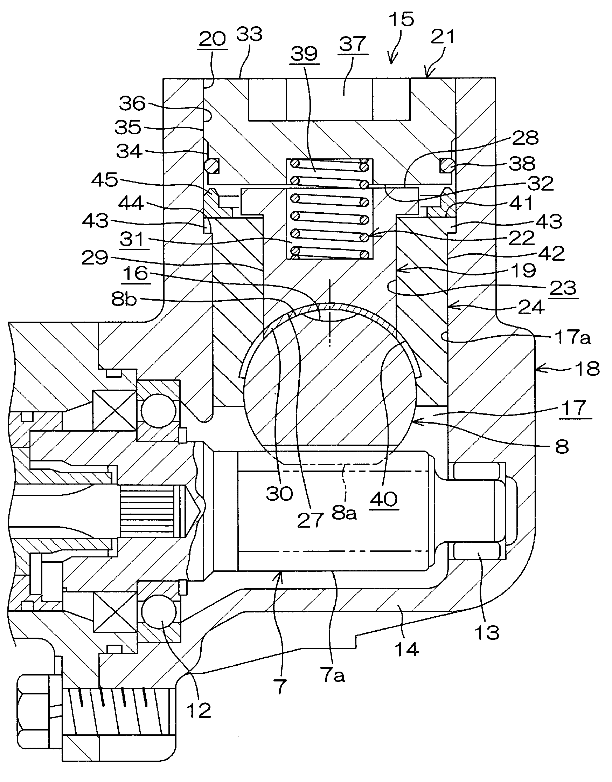

When the steering member 2 is turned, and the steering shaft 3 rotates, the rotation is converted into a linear movement of the rack shaft 8 in the axial direction Z1 by the pinion 7a and the rack 8a, and thus, the steered wheels 11 are steered. Referring to FIG. 2 that is a sectional view of a main part of the steering system 1, the pinion shaft 7 is rotatably supported in a pinion housing 14 by a first bearing 12 that is a ball bearing, and by a second bearing 13 that is a cylindrical roller bearing. The pinion 7a of the pinion shaft 7 and the rack 8a of the rack shaft 8 mesh with each other in the pinion housing 14.

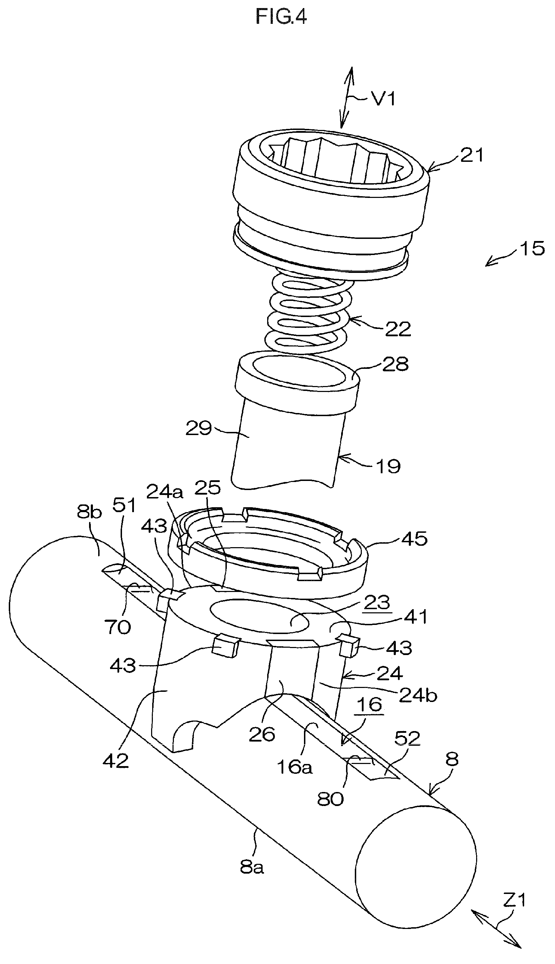

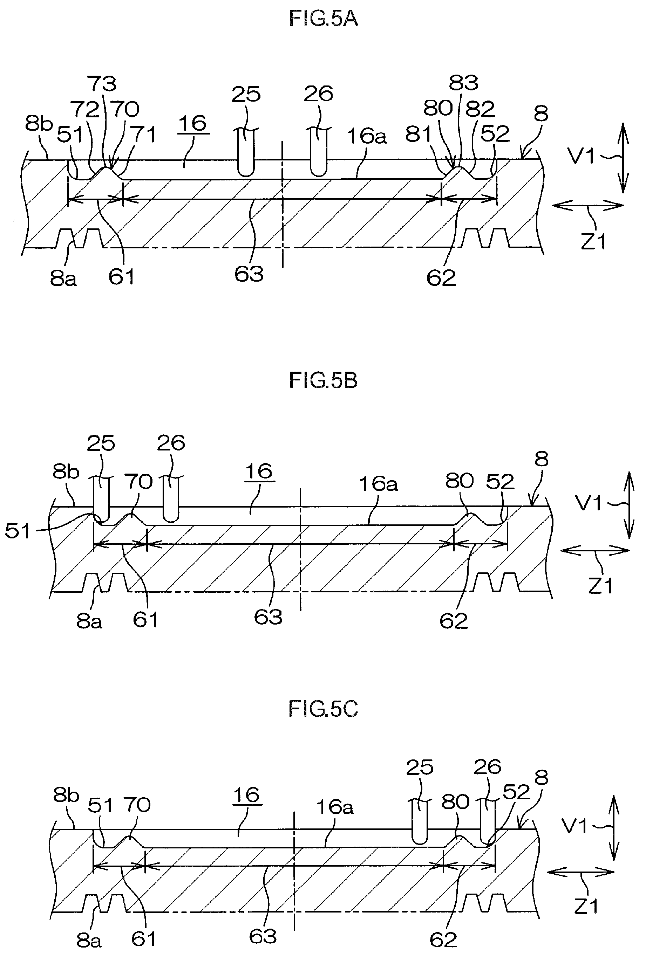

A rack shaft supporting structure 15 includes the rack shaft 8 and a housing 18. An axial groove 16 (also refer to FIGS. 4 and 5) is formed in a back face 8b of the rack shaft 8 so as to extend in the axial direction Z1, and the back face 8b is positioned opposite to the rack 8a that meshes with the pinion 7a. The housing 18 forms an accommodation portion 17 that extends in an orthogonal direction V1 orthogonal to the axial direction Z1. The rack shaft 8 is inserted into the housing 18. Referring to FIG. 5A, a bottom face 16a of the axial groove 16 of the rack shaft 8 includes a first region 61, a second region 62, and an intermediate region 63. The first region 61 includes a first axial end 51 that faces a first elastic body 25 with a gap interposed therebetween in the orthogonal direction V1 in a state where the rack shaft 8 has been displaced to one stroke end (also refer to FIG. 5B). The second region 62 includes a second axial end 52 that faces a second elastic body 26 with a gap interposed therebetween in the orthogonal direction V1 in a state where the rack shaft 8 has been displaced to the other stroke end (also refer to FIG. 5C). The intermediate region 63 is interposed between the first region 61 and the second region 62, and avoids contacting the elastic bodies 25, 26.

As illustrated in FIG. 5A, a chevron-shaped protrusion 70 is provided in the first region 61, and compresses the first elastic body 25 in the orthogonal direction V1. The chevron-shaped protrusion 70 has a first slope face 71 and a second slope face 72. The first slope face 71 is disposed on the side of the intermediate region 63. The second slope face 72 is disposed on the side of the first axial end 51, and tilts toward a side opposite to a side toward which the first slope face 71 tilts. An apex 73 is provided between the first slope face 71 and the second slope face 72. A chevron-shaped protrusion 80 is provided in the second region 62, and compresses the second elastic body 26 in the orthogonal direction V1. The chevron-shaped protrusion 80 has a first slope face 81 and a second slope face 82. The first slope face 81 is disposed on the side of the intermediate region 63. The second slope face 82 is disposed on the side of the second axial end 52, and tilts toward a side opposite to a side toward which the first slope face 81 tilts. An apex 83 is provided between the first slope face 81 and the second slope face 82.

Referring to FIG. 2, the rack shaft supporting structure 15 includes a rack guide 19, a sealing member 21, and a compression coil spring 22. The rack guide 19 is accommodated in the accommodation portion 17 so as to be able to move toward and move away from the rack shaft 8 in the orthogonal direction V1, and slidably supports the back face 8b of the rack shaft 8. The sealing member 21 is constituted by a plug that is fixed to an outward opening end 20 provided at a side of the accommodation portion 17, the side being opposite to the rack shaft 8-side. The compression coil spring 22 is an urging member that is interposed between the rack guide 19 and the sealing member 21, and urges the rack guide 19 toward the rack shaft 8.

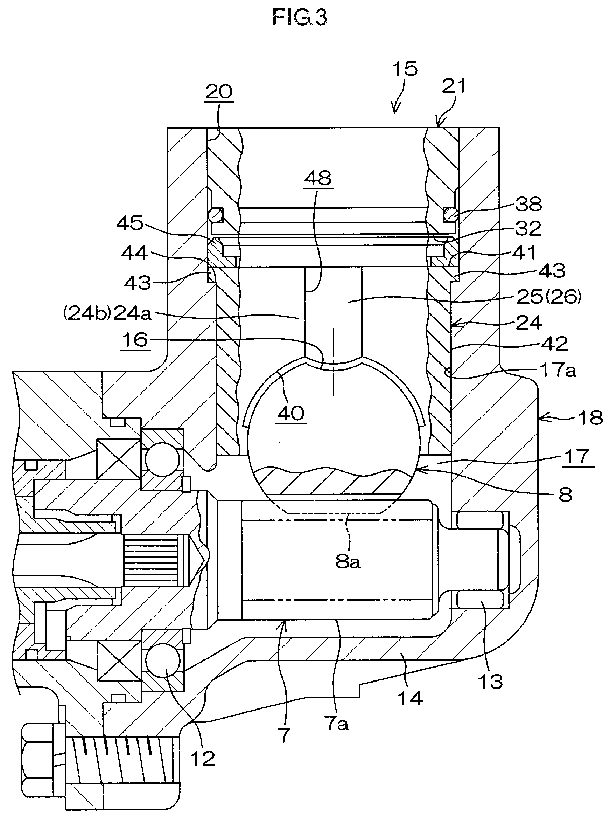

The rack shaft supporting structure 15 includes a rack guide supporting member 24. The rack guide supporting member 24 has a supporting hole 23, and the supporting hole 23 supports a part of the rack guide 19 in such a manner that the rack guide 19 is slidable in the orthogonal direction V1. The rack guide supporting member 24 is supported by the housing 18 or the sealing member 21. As illustrated in FIGS. 3 and 4, the rack shaft supporting structure 15 is supported by the rack guide supporting member 24. The rack shaft supporting structure 15 includes the first elastic body 25 and the second elastic body 26. The first elastic body 25 and the second elastic body 26 are accommodated in the rack guide supporting member 24, and can urge the rack shaft 8 via the axial groove 16 in a radial direction. The first elastic body 25 and the second elastic body 26 are held by a pair of side portions 24a, 24b of a cylindrical body that is the rack guide supporting member 24, the side portions 24a, 24b facing each other.

Specifically, the elastic bodies 25, 26 are respectively fitted into corresponding recessed fitting portions 48 (refer to FIG. 3) provided in the side portions 24a, 24b on the outer periphery of the rack guide supporting member 24. At least a second face 41-side end portion of each of the elastic bodies 25, 26 is fixed by using a fixing protrusion (not illustrated) provided on the recessed fitting portion 48. Accordingly, the elastic bodies 25, 26 can exhibit elasticity in the orthogonal direction V1.

The first elastic body 25 serves to press the rack shaft 8 in the radial direction via the chevron-shaped protrusion 70 when the rack shaft 8 is at one stroke end. The second elastic body 26 serves to press the rack shaft 8 in the radial direction via the chevron-shaped protrusion 80 when the rack shaft 8 is at the other stroke end. The housing 18 and the pinion housing 14 are integrally formed using a single material. The housing 18 is disposed on a side opposite to the pinion shaft 7 across the rack shaft 8. For example, the pinion housing 14 and the housing 18 are manufactured by die-casting.

Referring to FIG. 2, the rack guide 19 includes a first face 27, a second face (an end face) 28, and an outer periphery 29. The first face 27 faces the rack shaft 8. The second face 28 is provided on a side opposite to the first face 27. The outer periphery 29 is constituted by a cylindrical face. At least a part of the first face 27 of the rack guide 19 includes a recessed face substantially matching the shape of the back face 8b of the rack shaft 8, and a curved sliding contact plate 30 is fitted along the recessed face. The sliding contact plate 30 is in sliding contact with the back face 8b of the rack shaft 8 moving in the axial direction. A plate having a low friction coefficient is preferably used as the sliding contact plate 30. For example, a metal plate or a metal plate coated with fluororesin can be used as the sliding contact plate 30.

A recessed accommodation portion 31, which is consisted by, for example, a circular hole, is provided in the second face 28 of the rack guide 19, and accommodates a part of the compression coil spring 22. One end of the compression coil spring 22 is received by the bottom of the recessed accommodation portion 31. The sealing member 21 is constituted by a plug having a first face 32 and a second face 33. The first face 32 faces the second face 28 of the rack guide 19. The second face 33 is positioned on a side opposite to the first face 32. A male screw 35 is formed on an outer periphery 34 of the sealing member 21. On the other hand, a female screw 36 is formed in a predetermined range from the outward opening end 20 of the accommodation portion 17. The male screw 35 of the sealing member 21 is screwed into the female screw 36, and thus the sealing member 21 is fixed to the housing 18.

A tool engagement hole 37 having a polygonal cross section is provided in the second face 33 of the sealing member 21, and a tool for screwing the sealing member 21 is engaged with the tool engagement hole 37. A sealing member 38, which is an annular elastic member such as an O-ring, is accommodated and held in one or each of a plurality of annular accommodation grooves provided in the outer periphery 34 of the sealing member 21. The sealing member 38 serves to seal a gap between the outer periphery 34 of the sealing member 21 and an inner periphery 17a of the accommodation portion 17.

A recessed accommodation portion 39 is provided in the first face 32 of the sealing member 21 so as to accommodate a part of the compression coil spring 22. The other end of the compression coil spring 22 is received by the bottom of the recessed accommodation portion 39. That is, the compression coil spring 22 in a compressed state is interposed between the bottom of the recessed accommodation portion 39 of the sealing member 21 and the bottom of the recessed accommodation portion 31 of the rack guide 19, and the compression coil spring 22 elastically urges the rack guide 19 toward the rack shaft 8.

In a normal state in which a large load caused by a reverse input from the rack shaft 8-side is not input, a clearance having a predetermined size (for example, 30 µm to 50 µm) is formed between the first face 32 of the sealing member 21 and the second face 28 of the rack guide 19. When a large load caused by a reverse input from the rack shaft 8-side is input, the first face 32 of the sealing member 21 and the second face 28 of the rack guide 19 contact each other, and thus, the large load is received.

The rack guide supporting member 24 includes a cylindrical body having the supporting hole 23 at the center thereof. The rack guide supporting member 24 has a first face 40 that is recessed, a second face 41 that is constituted by a flat annular face, and an outer periphery 42. The first face 40 faces the rack shaft 8. The second face 41 faces the first face 32 of the sealing member 21. Outward protrusions 43 are formed in portions of the outer periphery 42 in the proximity of the second face 41 so as to protrude outwardly in the radial direction. The outward protrusions 43 are received by a stepped portion 44 provided on the inner periphery 17a of the accommodation portion 17 of the housing 18.

An annular spacer 45 is interposed between the second face 41 of the rack guide supporting member 24 and the first face 32 of the sealing member 21. The spacer 45 is fitted into the inner periphery 17a of the accommodation portion 17. The spacer 45 is in contact with the second face 41 of the rack guide supporting member 24. In a normal state in which a large load caused by a reverse input from the rack shaft 8 is not input, a clearance with a predetermined size (for example, 30 µm to 50 µm) is formed between the spacer 45 and the first face 32 of the sealing member 21. When a large load caused by a reverse input from the rack shaft 8 is input, the first face 32 of the sealing member 21 and the spacer 45 contact each other, and thus, the large load is received.

In the embodiment, when the rack shaft 8 is in the vicinity of each of the stroke ends, a corresponding one of the elastic bodies 25, 26, which are respectively compressed by the chevron-shaped protrusions 70, 80 in the axial groove 16, applies a compression reaction force to the rack shaft 8. Accordingly, a moving speed of the rack shaft 8 at a time when the rack shaft 8 reaches each of the stroke ends (in other words, a speed at a time of so-called end contact) decreases, and the occurrence of impact noise or vibration can be suppressed. The chevron-shaped protrusion 70 has the first slope face 71 and the second slope face 72 tilting toward the sides opposite to each other, and the chevron-shaped protrusion 80 has the first slope face 81 and the second slope face 82 tilting toward the sides opposite to each other. Accordingly, the chevron-shaped protrusions 70, 80 can move smoothly with respect to the elastic bodies 25, 26. As a result, a turning-back steering operation can be smoothly performed.

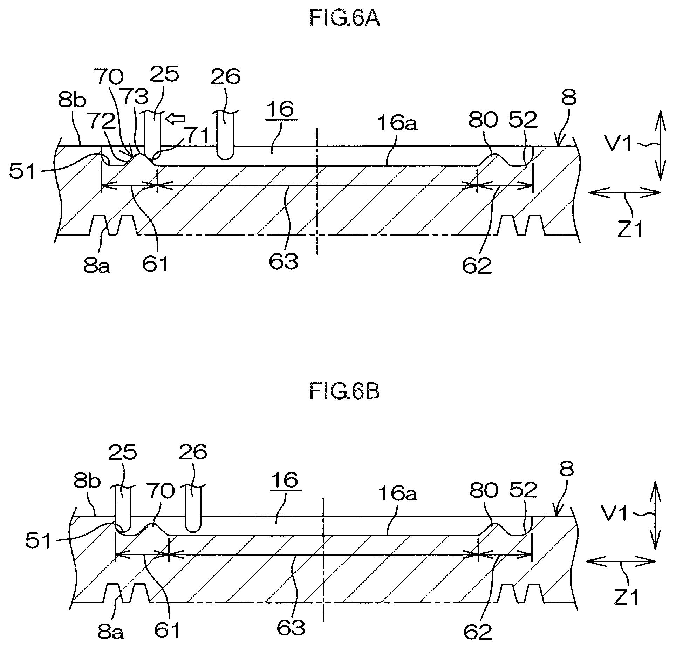

Specifically, FIGS. 6A and 6B illustrate operations when the rack shaft 8 moves toward one stroke end. As illustrated in FIG. 6A, the first elastic body 25 moves onto the first slope face 71 of the chevron-shaped protrusion 70 in the first region 61. Then the first elastic body 25 moves beyond the apex 73 and moves on the second slope face 72. Thereafter, as illustrated in FIG. 6B, the first elastic body 25 reaches the first axial end 51. The rack shaft 8 is pressed in the radial direction of the rack shaft 8 (equivalent to the orthogonal direction V1), using the chevron-shaped protrusion 70. Thus, it is possible to decrease the moving speed of the rack shaft 8 when the rack shaft 8 moves to one stroke end. The first elastic body 25 moves onto the apex 73 via the first slope face 71, and the pressing reaction force caused by the first elastic body 25 is gradually increased due to the first slope face 71. Accordingly, it is possible to obtain smooth steering feeling.

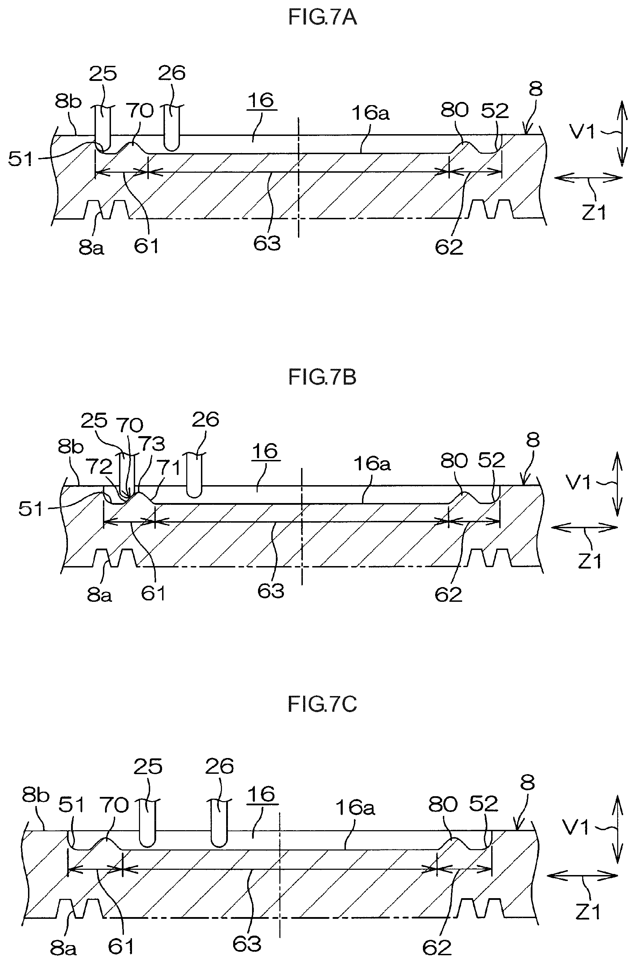

Although not illustrated, when the second elastic body 26 moves toward the other stroke end, movements of the second elastic body 26 and the chevron-shaped protrusion 80 are the same as those of the first elastic body 25 and the chevron-shaped protrusion 70 illustrated in FIGS. 6A and 6B. As illustrated in FIG. 7B, the first elastic body 25 moves onto the second slope face 72 from a state where the rack shaft 8 is positioned at one stroke end (that is, a state where the first elastic body 25 faces the first axial end 51) as illustrated in FIG. 7A. Then, the first elastic body 25 moves beyond the apex 73 and moves on the first slope face 71. Thereafter, as illustrated in FIG. 7C, the first elastic body 25 moves to the intermediate region 63. When a turning-back steering operation is performed at one stroke end, the pressing reaction force caused by the first elastic body 25 is gradually increased due to the second slope face 72. Accordingly, it is possible to obtain smooth steering feeling during the turning-back steering operation.

Although not illustrated, when the rack shaft 8 moves from the other stroke end due to the turning-back steering operation, movements of the second elastic body 26 and the chevron-shaped protrusion 80 are the same as those of the first elastic body 25 and the chevron-shaped protrusion 70 illustrated in FIGS. 7A to 7C. The first elastic body 25 is engaged with only the chevron-shaped protrusion 70 in the first region 61, and the second elastic body 26 is engaged with only the chevron-shaped protrusion 80 in the second region 62. It is possible to increasing the life of the elastic bodies 25, 26.

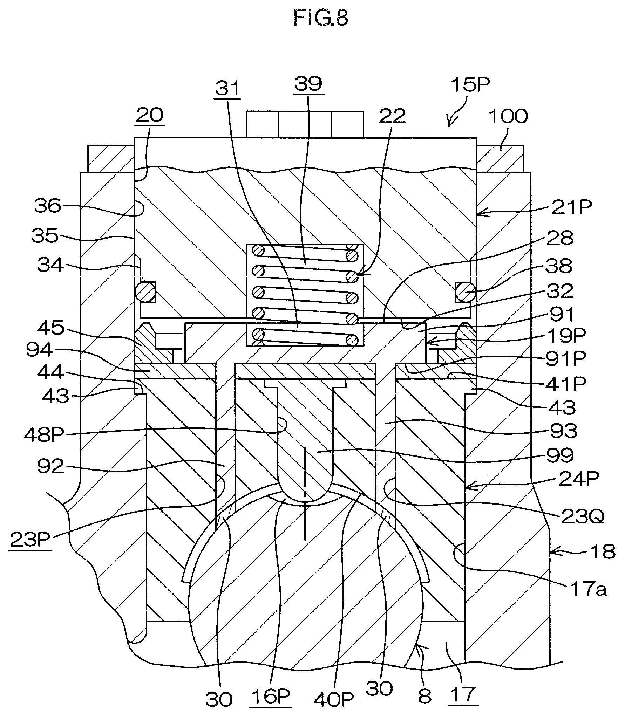

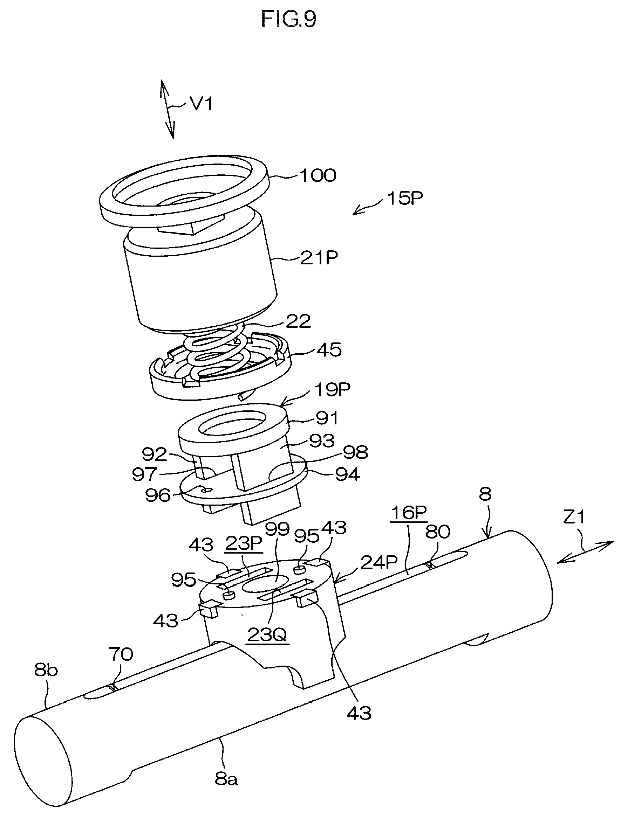

Subsequently, FIGS. 8 to 10 illustrate a second embodiment of the present invention. Referring to FIGS. 8 and 9, a rack shaft supporting structure 15P according to the second embodiment is different in the following points from the rack shaft supporting structure 15 according to the first embodiment illustrated in FIGS. 2 to 4. That is, a rack guide 19P includes a disc-shaped main body 91 and a pair of leg portions 92, 93. The main body 91 has a recessed portion that receives the compression coil spring 22. The leg portions 92, 93 extend from the main body 91 so as to be parallel to the orthogonal direction V1, and receive the back face 8b of the rack shaft 8.

A rack guide supporting member 24P has a single fitting hole 48P and a pair of supporting holes 23P, 23Q. For example, the fitting hole 48P is constituted by, for example, a round hole that extends through the center of a cylindrical body in the orthogonal direction V1. The supporting holes 23P, 23Q are respectively disposed on opposite sides of the fitting hole 48P, and respectively support the leg portions 92, 93 in such a manner that the leg portions 92, 93 are slidable in the orthogonal direction V1. The rack guide supporting member 24P has a first face 40P that is curved, and a second face 41P that is flat. The first face 40P faces the back face 8b of the rack shaft 8. The second face 41P is positioned on a side opposite to the first face 40P. A plate-shaped spacer 94 is interposed between the second face 41P of the rack guide supporting member 24P and a facing face 91P of the main body 91 of the rack guide 19P, and the plate-shaped spacer 94 is in contact with the second face 41P and the facing face 91P.

As illustrated in FIG. 9, protruding portions 95 provided in the second face 41P of the rack guide supporting member 24P are fitted into recessed portions 96 (that may be insertion holes as illustrated) provided in the spacer 94. Accordingly, the spacer 94 is restricted from rotating with respect to the rack guide supporting member 24P. Recessed portions may be provided in the second face 41P of the rack guide supporting member 24P, and protruding portions may be provided in the spacer 94. The spacer 94 has a pair of supporting holes 97, 98 into which the leg portions 92, 93 are respectively inserted, and which respectively support the leg portions 92, 93 in such a manner that the leg portions 92, 93 are slidable in the orthogonal direction V1.

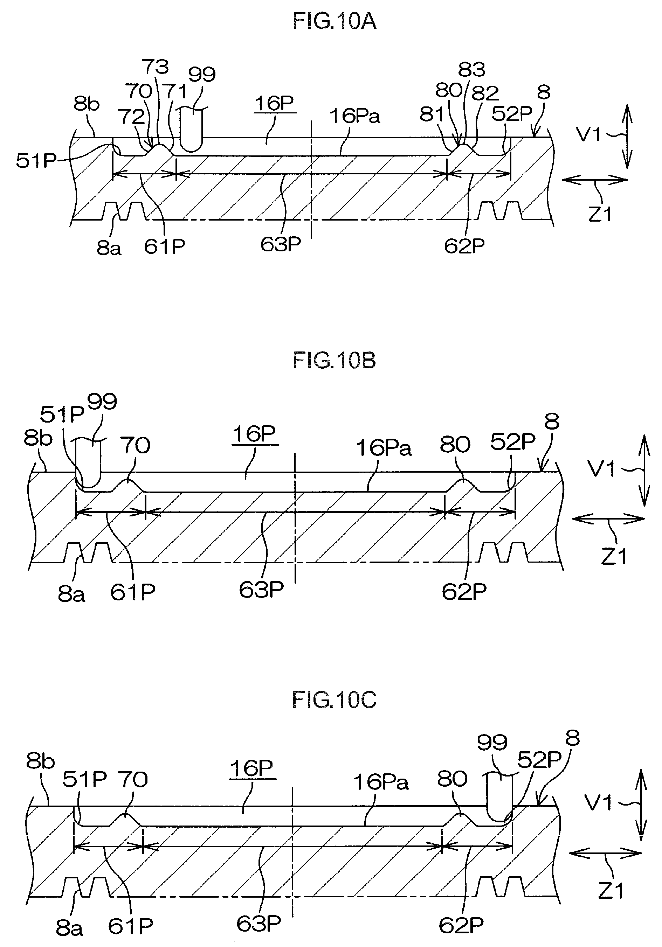

As illustrated in FIG. 8, for example, a round bar-shaped elastic body 99 is fitted into and held by the fitting hole 48P. At least a second face 41P-side end portion of the elastic body 99 is fixed by using a fixing protrusion (not illustrated) provided on the fitting hole 48P. The spacer 94 serves to prevent the elastic body 99 from slipping out of the fitting hole 48P. Referring to FIG. 10A, a bottom face 16Pa of an axial groove 16P of the rack shaft 8 includes a first region 61P, a second region 62P, and an intermediate region 63P. The first region 61P includes a first axial end 51P that faces the single elastic body 99 with a gap interposed therebetween in the orthogonal direction V1 in a state where the rack shaft 8 has been displaced to one stroke end (also refer to FIG. 10B). The second region 62P includes a second axial end 52P that faces the single elastic body 99 with a gap interposed therebetween in the orthogonal direction V1 in a state where the rack shaft 8 has been displaced to the other stroke end (also refer to FIG. 10C). The intermediate region 63P is interposed between the first region 61P and the second region 62P, and avoids contacting the elastic body 99.

A lock nut 100 is fitted to a male screw 35 on the outer periphery of a sealing member 21P, thereby locking the sealing member 21P to the housing 18. In constituent elements in the second embodiment illustrated in FIGS. 8 to 10, the same constituent elements as the constituent elements in the first embodiment illustrated in FIGS. 2 to 6 are denoted by the same reference signs as those denoting the constituent elements in the first embodiment in FIGS. 2 to 6.

In the second embodiment as well as in the first embodiment, when the rack shaft 8 is in the vicinity of each of the stroke ends, the elastic body 99 compressed by a corresponding one of the chevron-shaped protrusions 70, 80 in the axial groove 16P applies a compression reaction force to the rack shaft 8. Accordingly, a moving speed of the rack shaft 8 at a time when the rack shaft 8 reaches each of the stroke ends (in other words, a speed at the time of so-called end contact) decreases, and the occurrence of impact noise or vibration can be suppressed. The chevron-shaped protrusion 70 has the first slope face 71 and the second slope face 72 tilting toward sides opposite to each other, and the chevron-shaped protrusion 80 has the first slope face 81 and the second slope face 82 tilting toward the sides opposite to each other. Accordingly, the chevron-shaped protrusions 70, 80 can move smoothly with respect to the elastic body 99. As a result, a turning-back steering operation can be smoothly performed.

Since the leg portions 92, 93 of the rack guide 19P are respectively supported by the supporting holes 23P, 23Q of the rack guide supporting member 24P, the rack guide 19P can be stably supported. In particular, since the leg portions 92, 93 of the rack guide 19P are respectively supported by the supporting holes 23P, 23Q of the rack guide supporting member 24P, the rack guide 19P can be more stably supported.

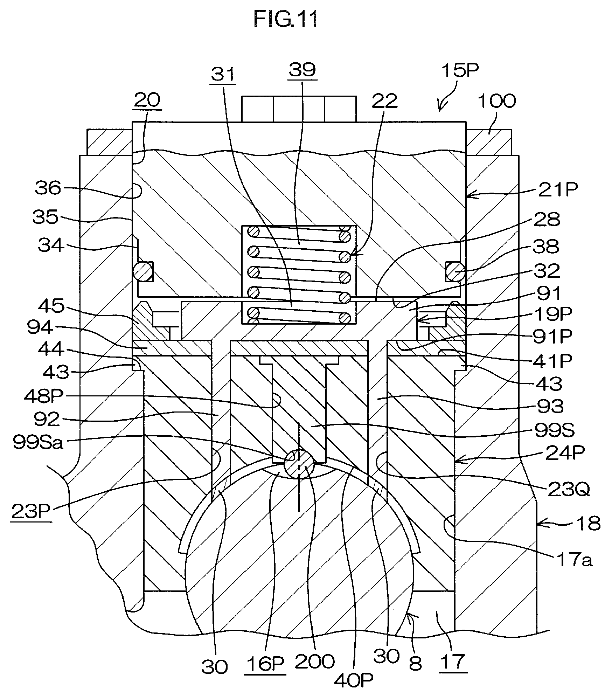

Next, FIG. 11 illustrates a third embodiment of the present invention. Referring to FIG. 11, the third embodiment is different in the following points from the second embodiment illustrated in FIG. 8. That is, a ball 200 is rotatably supported by a hemispherical recessed holding portion 99Sa formed at the distal end of an elastic body 99S, and the ball 200 is accommodated in the axial groove 16P of the rack shaft 8. Rubber, resin, ceramics, steel, or the like is used as a material of the ball 200.

In constituent elements in the third embodiment illustrated in FIG. 11, the same constituent elements as the constituent elements in the second embodiment illustrated in FIG. 8 are denoted by the same reference signs as those denoting the constituent elements in the second embodiment in FIG. 8. In the third embodiment, when the rack shaft 8 is in the vicinity of each of the stroke ends, a corresponding one of the chevron-shaped protrusions in the axial groove of the rack shaft 8 compresses the elastic body 99S via the ball 200. The compressed elastic body 99S applies a compression reaction force to the rack shaft 8 via the ball 200. Accordingly, a moving speed of the rack shaft 8 at the time when the rack shaft 8 reaches each of the stroke ends (in other words, a speed at the time of so-called end contact) decreases, and the occurrence of impact noise or vibration can be suppressed. Since the ball 200 is in rolling contact with a corresponding one of the chevron-shaped protrusions when the rack shaft 8 is in the vicinity of each of the stroke ends, a sudden change in steering torque is suppressed, an thus steering feeling is improved.

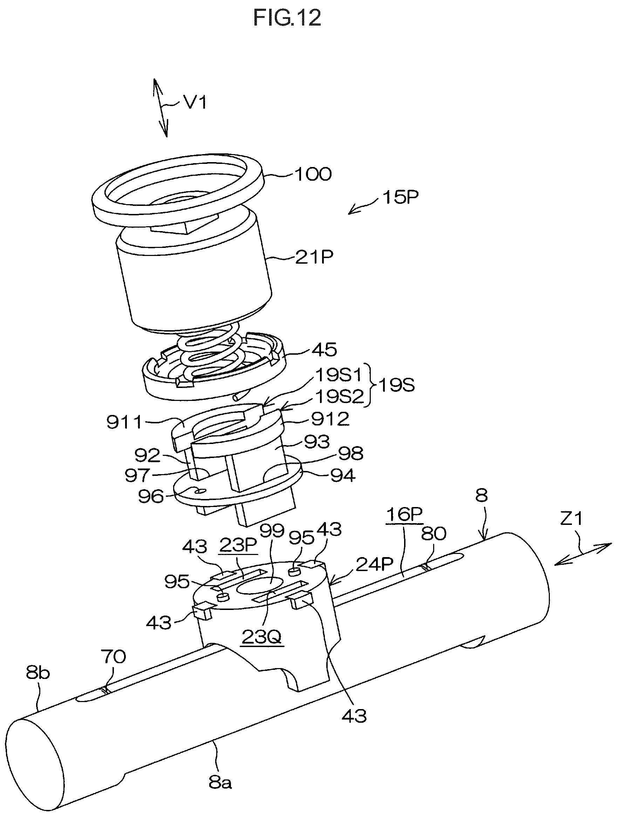

Next, FIG. 12 illustrates a fourth embodiment of the present invention. Referring to FIG. 12, the fourth embodiment is different in the following points from the second embodiment illustrated in FIG. 9. That is, in the fourth embodiment, a rack guide 19S is constituted by a first split body 19S1 and a second split body 19S2. The first split body 19S1 includes a semicircular main body 911 and the leg portion 92 extending from the main body 911. The second split body 19S2 includes a semicircular main body 912 and the leg portion 93 extending from the main body 912. In constituent elements in the fourth embodiment illustrated in FIG. 12, the same constituent elements as the constituent elements in the second embodiment illustrated in FIG. 9 are denoted by the same reference signs as those denoting the constituent elements in the second embodiment illustrated in FIG. 9. The present invention is not limited to the above-mentioned embodiments, and for example, in the second to fourth embodiments, any one of the leg portions 92, 93 may be removed.

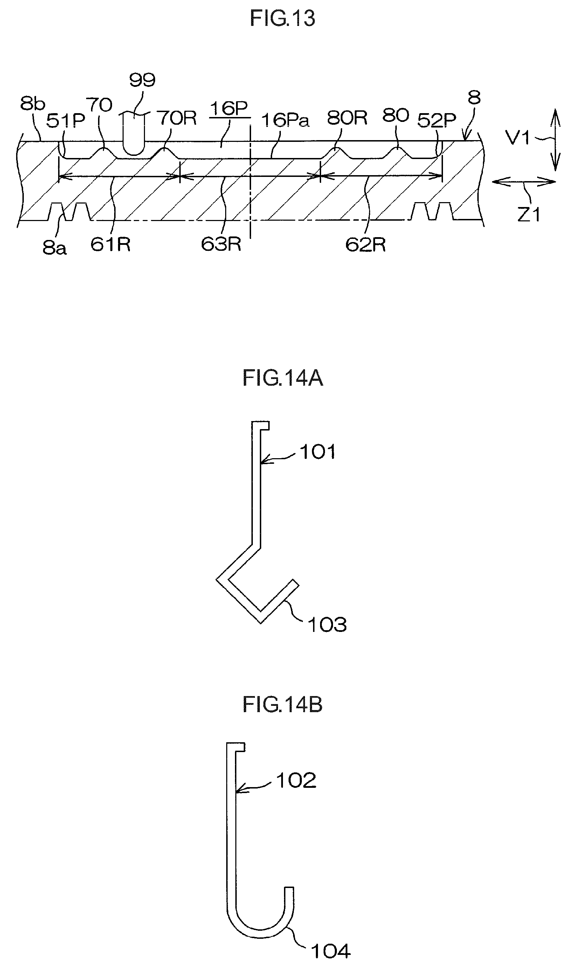

As illustrated in a fifth embodiment shown in FIG. 13, a plurality of chevron-shaped protrusions 70, 70R may be provided in a first region 61R in such a manner that the chevron-shaped protrusions 70, 70R are apart from each other in the axial direction Z1 of the rack shaft 8. A plurality of chevron-shaped protrusions 80, 80R may be provided in a second region 62R in such a manner that the chevron-shaped protrusions 80, 80R are apart from each other in the axial direction Z1 of the rack shaft 8. An intermediate region 63R may be provided between the first region 61R and the second region 62R. In this case, when the rack shaft 8 moves to each of the stroke ends, a moving speed of the rack shaft 8 can be further decreased.

It is possible to use resin, metal, ceramics, rubber, or the like as an elastic body. An elastic body, with which a hard body is coated, may be used as the elastic body. For example, as illustrated in sixth and seventh embodiments shown in FIGS. 14A and 14B, elastic bodies 101, 102, each of which is constituted by a leaf spring, may be used as the elastic body. The elastic body 101 in the sixth embodiment has a bending end 103 that is bent into a rectangular shape and is elastically deformable. The elastic body 102 in the seventh embodiment has a bending end 104 that is bent into an arc shape and is elastically deformable. The bending ends 103, 104 are accommodated in the axial groove (not illustrated) of the rack shaft.

In the embodiments, the positions of the outward protrusions 43 of each of the rack guide supporting members 24, 24P are regulated to the stepped portion 44 by using the spacer 45. However, instead, a snap ring (not illustrated) may be fitted into a peripheral groove formed in the inner periphery 17a of the accommodation portion 17 of the housing 18, and the positions of the outward protrusions 43 may be regulated to the stepped portion 44 by using the snap ring. In the first embodiment illustrated in FIG. 3, the ball 200 may be rotatably held at the distal end of each of the elastic bodies 25, 26 as in the third embodiment illustrated in FIG. 11, although this configuration is not illustrated.

In addition, various modifications can be made to the present invention within the scope of the claims.

## Claims

1. A rack shaft supporting structure (15; 15P) comprising:
a rack shaft (8) that has a rack (8a) that meshes with a pinion (7a), and an axial groove (16; 16P) that is formed in a back face (8b) of the rack shaft (8);
a housing (18) which has an accommodation portion (17), and into which the rack shaft (8) is inserted, the accommodation portion (17) extending in an orthogonal direction orthogonal to an axial direction of the rack shaft (8);
a rack guide (19; 19P) that is accommodated in the accommodation portion (17), and supports the rack shaft (8) in such a manner that the rack shaft (8) is slidable in the axial direction;
a sealing member (21; 21P) that is fixed to an outward opening end (20) that is provided at a side of the accommodation portion (17), the side being opposite to the rack shaft (8);
an urging member (22) that is interposed between the sealing member (21; 21P) and the rack guide (19; 19P) so as to urge the rack guide (19; 19P) toward the rack shaft (8);
a rack guide supporting member (24; 24P) that has a supporting hole (23; 23P, 23Q) that supports a part of the rack guide (19; 19P) in such a manner that the rack guide (19; 19P) is slidable in the orthogonal direction, the rack guide supporting member (24; 24P) being supported by the housing (18) or the sealing member (21; 21P); and
an elastic body (25, 26) that is supported by the rack guide supporting member (24; 24P), is accommodated in the axial groove (16; 16P) of the rack shaft (8), and is able to press the rack shaft (8) in a radial direction,
wherein a bottom face (16a; 16Pa) of the axial groove (16; 16P) of the rack shaft (8) includes a first region (61; 61P) that includes a first axial end (51; 51P) that faces the elastic body (25) in the orthogonal direction when the rack shaft (8) is at one stroke end, a second region (62; 62P) that includes a second axial end (52; 52P) that faces the elastic body (26) in the orthogonal direction when the rack shaft (8) is at the other stroke end, and an intermediate region (63; 63P) that is interposed between the first (61; 61P) and second regions (62; 62P); **characterized in that**
the intermediate region (63; 63P) avoids contacting the elastic body (25, 26),
wherein a chevron-shaped protrusion (70, 80) that compresses the elastic body (25, 26) in the orthogonal direction is provided in each of the first (61; 61P) and second regions (62; 62P), and
wherein the chevron-shaped protrusion (70, 80) includes a first slope face (71, 81) that is disposed on a side of the intermediate region (63; 63P), and a second slope face (72, 82) that is disposed on a side of a corresponding one of the first (51; 51P) and second axial ends (52; 52P), and that tilts toward a side opposite to a side toward which the first slope face (71, 81) tilts.

2. The rack shaft supporting structure (15) according to claim 1,
wherein the rack guide supporting member (24) includes a cylindrical body having the supporting hole (23) at a center of the cylindrical body,
wherein the elastic body (25, 26) includes a first elastic body (25) that comes into contact with the chevron-shaped protrusion (70) in the first region (61), and a second elastic body (26) that comes into contact with the chevron-shaped protrusion (80) in the second region (62), and
wherein the first and second elastic bodies (25, 26) are held by a pair of side portions (24a, 24b) of the cylindrical body of the rack guide supporting member (24), the side portions (24a, 24b) facing each other.

3. The rack shaft supporting structure (15) according to claim 1,
wherein the rack guide (19) includes a main body, and
wherein the part of the rack guide (19) supported by the supporting hole (23) includes a leg portion that extends from the main body in parallel with the orthogonal direction, and that receives the rack shaft (8).

4. The rack shaft supporting structure (15P) according to claim 3,
wherein a pair of leg portions (92, 93) is provided as the leg portion, and a pair of supporting holes (23P, 23Q) is provided as the supporting hole so that the supporting holes (23P, 23Q) support the leg portions (92, 93), respectively.

5. The rack shaft supporting structure (15P) according to any one of claims 1 to 4, further comprising:
a ball (200) that is rotatably supported by the elastic body (99S),
wherein the chevron-shaped protrusion (70, 80) compresses the elastic body (99S) in the orthogonal direction via the ball (200).

## Patentansprüche

1. Zahnstangentragstruktur (15; 15P), aufweisend:
eine Zahnstange (8), welche eine Verzahnung (8a) in Eingriff mit einem Ritzel (7a) und eine axiale Vertiefung (16; 16P) hat, welche in einer rückseitigen Fläche (8b) der Zahnstange (8) ausgebildet ist;
ein Gehäuse (18), welches einen Aufnahmeabschnitt (17) hat, in welchen die Zahnstange (8) eingesetzt ist, wobei sich der Aufnahmeabschnitt (17) in einer senkrechten Richtung senkrecht zu einer Axialrichtung der Zahnstange (8) erstreckt;
eine Verzahnungsführung (19; 19P), die in dem Aufnahmeabschnitt (17) aufgenommen ist und die Zahnstange (8) derart lagert, dass die Zahnstange (8) in der Axialrichtung gleitbeweglich ist;
ein Dichtteil (21; 21 P), welches an einem sich nach außen öffnenden Ende (20) befestigt ist, welches sich an einer Seite des Aufnahmeabschnitts (17) befindet, wobei diese Seite entgegengesetzt zur Zahnstange (8) ist;
ein Spannteil (22), welches zwischen dem Dichtteil (21; 21 P) und die Verzahnungsführung (19; 19P) gesetzt ist, um die Verzahnungsführung (19; 19P) in Richtung Zahnstange (8) zu spannen;
ein Verzahnungsführungslagerteil (24; 24P), welches eine Lageröffnung (23; 23P, 23Q) hat, welche einen Teil der Verzahnungsführung (19; 19P) derart lagert, dass die Verzahnungsführung (19; 19P) in der senkrechten Richtung gleitbeweglich ist, wobei das Verzahnungsführungslagerteil (24; 24P) von dem Gehäuse (18) oder dem Dichtteil (21; 21 P) gelagert ist; und
einen elastischen Körper (25, 26) der von dem Verzahnungsführungslagerteil (24; 24P) gelagert ist, in der axialen Vertiefung (16; 16P) der Zahnstange (8) aufgenommen ist und die Zahnstange (8) in einer radialen Richtung mit Druck zu beaufschlagen vermag,
wobei eine Bodenfläche (16a; 16Pa) der axialen Vertiefung (16; 16P) der Zahnstange (8) einen ersten Bereich (61; 61 P), der ein erstes axiales Ende (51; 51 P) beinhaltet, welches in der senkrechten Richtung zu dem elastischen Körper (25) weist, wenn die Zahnstange (8) an einem Hubende ist, sowie einen zweiten Bereich (62; 62P) enthält, der ein zweites axiales Ende (52; 52P) beinhaltet, welches zu dem elastischen Körper (26) in der senkrechten Richtung zeigt, wenn die Zahnstange (8) an dem anderen Hubende ist und einen Zwischenbereich (63; 63P) enthält, der zwischen dem ersten (61; 61 P) und zweiten Bereich (62; 62P) liegt, **dadurch gekennzeichnet, dass**,
der Zwischenbereich (63; 63P) einen Kontakt mit dem elastischen Körper (25; 26) vermeidet,
wobei ein wulstförmiger Vorsprung (70, 80), der den elastischen Körper (25, 26) in der senkrechten Richtung zusammendrückt, an jedem von ersten (61; 61 P) und zweiten Bereichen (62; 62P) vorgesehen ist,
wobei der wulstförmige Vorsprung (70, 80) eine erste Neigungsfläche (71, 81), die sich auf Seiten des Zwischenabschnitts (63; 63P) und eine zweite Neigungsfläche (72, 82) aufweist, welche sich auf Seiten eines entsprechenden von erstem (51; 51 P) und zweitem axialen Ende (52; 52P) befindet und welche in Richtung einer Seite entgegengesetzt zu der Seite geneigt ist, in welche die erste Neigungsfläche (71, 81) geneigt ist.

2. Zahnstangentragstruktur (15) nach Anspruch 1,
wobei das Verzahnungsführungslagerteil (24) einen zylindrischen Körper aufweist, wobei die Lageröffnung (23) mittig des zylindrischen Körpers ist,
wobei der elastische Körper (25, 26) einen ersten elastischen Körper (25) enthält, der in Kontakt mit dem wulstförmigen Vorsprung (70) in dem ersten Bereich (61) gelangt, sowie einen zweiten elastischen Körper (26), der in Kontakt mit dem wulstförmigen Vorsprung (80) in dem zweiten Bereich (62) gelangt,
wobei die ersten und zweiten elastischen Körper (25, 26) durch ein Paar von Seitenabschnitten (24a, 24b) des zylindrischen Körpers des Verzahnungsführungslagerteils (24) gehalten sind, wobei die Seitenabschnitte (24a, 24b) aufeinander zuweisen.

3. Zahnstangentragstruktur (15) nach Anspruch 1,
wobei die Verzahnungsführung (19) einen Hauptkörper beinhaltet,
wobei der Teil der Verzahnungsführung (19), der von der Lageröffnung (23) gelagert ist, einen Beinabschnitt enthält, der sich von dem Hauptkörper parallel zur senkrechten Richtung erstreckt und der die Zahnstange (8) aufnimmt.

4. Zahnstangentragstruktur (15P) nach Anspruch 3,
wobei ein Paar von Beinabschnitten (92, 93) als der Beinabschnitt vorgesehen ist und ein Paar von Lageröffnungen (23P, 23Q) als die Lageröffnung vorgesehen ist, so dass die Lageröffnungen (23P, 23Q) die Beinabschnitte (92, 93) entsprechend lagern.

5. Zahnstangentragstruktur (15P) nach einem der Ansprüche 1 bis 4, weiterhin aufweisend:
eine Kugel (200), welche drehbeweglich von dem elastischen Körper (99S) gelagert ist,
wobei der wulstförmige Vorsprung (70, 80) den elastischen Körper (99S) über die Kugel (200) in die senkrechte Richtung zusammendrückt.

## Revendications

1. Structure de support d'arbre de crémaillère (15 ; 15P) comprenant :
un arbre de crémaillère (8) qui a une crémaillère (8a) qui s'engrène avec un pignon (7a) et une rainure axiale (16 ; 16P) qui est formée dans une face arrière (8b) de l'arbre de crémaillère (8) ;
un boîtier (18) qui a une partie de logement (17) et dans laquelle l'arbre de crémaillère (8) est inséré, la partie de logement (17) s'étendant dans une direction orthogonale, orthogonale à une direction axiale de l'arbre de crémaillère (8) ;
un guide de crémaillère (19 ; 19P) qui est logé dans la partie de logement (17), et supporte l'arbre de crémaillère (8) de sorte que l'arbre de crémaillère (8) peut coulisser dans la direction axiale ;
un élément d'étanchéité (21 ; 21P) qui est fixé sur une extrémité s'ouvrant vers l'extérieur (20) qui est prévue au niveau d'un côté de la partie de logement (17), le côté étant opposé à l'arbre de crémaillère (8) ;
un élément de poussée (22) qui est intercalé entre l'élément d'étanchéité (21 ; 21P) et le guide de crémaillère (19 ; 19P) afin de pousser le guide de crémaillère (19 ; 19P) vers l'arbre de crémaillère (8) ;
un élément de support de guide de crémaillère (24 ; 24P) qui a un trou de support (23 ; 23P, 23Q) qui supporte une partie du guide de crémaillère (19 ; 19P) de sorte que le guide de crémaillère (19 ; 19P) peut coulisser dans la direction orthogonale, l'élément de support de guide de crémaillère (24 ; 24P) étant supporté par le boîtier (18) ou l'élément d'étanchéité (21 ; 21P) ; et
un corps élastique (25, 26) qui est supporté par l'élément de support de guide de crémaillère (24 ; 24P), est logé dans la rainure axiale (16 ; 16P) de l'arbre de crémaillère (8) et peut comprimer l'arbre de crémaillère (8) dans une direction radiale,
dans laquelle une face inférieure (16a ; 16Pa) de la rainure axiale (16 ; 16P) de l'arbre de crémaillère (8) comprend une première région (61 ; 61P) qui comprend une première extrémité axiale (51 ; 51P) qui fait face au corps élastique (25) dans la direction orthogonale lorsque l'arbre de crémaillère (8) est à une fin de course, une seconde région (62 ; 62P) qui comprend une seconde extrémité axiale (52 ; 52P) qui fait face au corps élastique (26) dans la direction orthogonale lorsque l'arbre de crémaillère (8) est à l'autre fin de course, et une région intermédiaire (63 ; 63P) qui est intercalée entre les première (61 ; 61P) et seconde régions (62 ; 62P) ; **caractérisée en ce que** :
la région intermédiaire (63 ; 63P) évite d'entrer en contact avec le corps élastique (25, 26),
dans laquelle une saillie en forme de chevron (70, 80) qui comprime le corps élastique (25, 26) dans la direction orthogonale est prévue dans chacune parmi les première (61 ; 61P) et seconde régions (62 ; 62P), et
dans laquelle la saillie en forme de chevron (70, 80) comprend une première face d'inclinaison (71, 81) qui est disposée sur un côté de la région intermédiaire (63 ; 63P) et une seconde face d'inclinaison (72, 82) qui est disposée sur un côté d'une extrémité correspondante des première (51 ; 51P) et seconde extrémités axiales (52 ; 52P) et qui s'incline vers un côté opposé à un côté vers lequel la première face d'inclinaison (71, 81) s'incline.

2. Structure de support d'arbre de crémaillère (15) selon la revendication 1,
dans laquelle l'élément de support de guide de crémaillère (24) comprend un corps cylindrique ayant le trou de support (23) au niveau d'un centre du corps cylindrique,
dans laquelle le corps élastique (25, 26) comprend un premier corps élastique (25) qui vient en contact avec la saillie en forme de chevron (70) dans la première région (61) et un second corps élastique (26) qui vient en contact avec la saillie en forme de chevron (80) dans la seconde région (62), et
dans laquelle les premier et second corps élastiques (25, 26) sont maintenus par une paire de parties latérales (24a, 24b) du corps cylindrique de l'élément de support de guide de crémaillère (24), les parties latérales (24a, 24b) se faisant face.

3. Structure de support d'arbre de crémaillère (15) selon la revendication 1,
dans laquelle le guide de crémaillère (19) comprend un corps principal, et
dans laquelle la partie du guide de crémaillère (19) supportée par le trou de support (23) comprend une partie de patte qui s'étend à partir du corps principal parallèlement à la direction orthogonale, et qui reçoit l'arbre de crémaillère (8).

4. Structure de support d'arbre de crémaillère (15P) selon la revendication 3,
dans laquelle une paire de parties de patte (92, 93) est prévue en tant que partie de patte, et une paire de trous de support (23P, 23Q) est prévue en tant que trou de support de sorte que les trous de support (23P, 23Q) supportent respectivement les parties de patte (92, 93).

5. Structure de support d'arbre de crémaillère (15P) selon l'une quelconque des revendications 1 à 4, comprenant en outre :
une bille (200) qui est supportée en rotation par le corps élastique (99S),
dans laquelle la saillie en forme de chevron (70, 80) comprime le corps élastique (99S) dans la direction orthogonale via la bille (200).
